Europäisches Patentamt

European Patent Office

Office européen des brevets

(19)

(11) Veröffentlichungsnummer: **0 032 368**
**B1**

(12) **EUROPÄISCHE PATENTSCHRIFT**

(45) Veröffentlichungstag der Patentschrift: **28.12.83**

(21) Anmeldenummer: **81100008.2**

(22) Anmeldetag: **02.01.81**

(51) Int. Cl.³: **G 06 K 19/08,**
G 07 C 11/00

(54) Datenkarte.

(30) Priorität: **12.01.80 CH 207/80**

(43) Veröffentlichungstag der Anmeldung:
**22.07.81 Patentblatt 81/29**

(45) Bekanntmachung des Hinweises auf die Patenterteilung:
**28.12.83 Patentblatt 83/52**

(84) Benannte Vertragsstaaten:
**DE FR GB NL SE**

(56) Entgegenhaltungen:
**EP - A - 0 032 369**
**FR - A - 2 279 162**
**US - A - 4 094 462**
**US - A - 4 108 367**
**US - A - 4 138 058**

(73) Patentinhaber: **Zeag Systems AG**
**Rietbachstrasse 5**
**CH-8952 Schlieren-Zürich (CH)**

(72) Erfinder: **Ehrat, Kurt**
**Grebweg 17**
**CH-8162 Steinmaur (CH)**

(74) Vertreter: **Fillinger, Peter, Dr.**
**Rütistrasse 1a**
**CH-5400 Baden (CH)**

Courier Press, Leamington Spa, England.

Datenkarte

Die vorliegende Erfindung bezeiht sich auf eine Datenkarte, welche maschinell lesbare Karteninformation in kodierter Form enthält, wobei jedes Informationselement einen Lichtpfad mit einer Lichteintrittsstelle und einer gegenüber dieser in der Kartenebene verstezten Lichtaustrittsstelle aufweist, die in einer der beiden zur Kartenebene parallelen Kartenflächen angeordnet sind.

Eine derartige Datenkarte ist beispielsweise aus der US—PS 4 138 058 bekannt, bei welcher die Lichtpfade aus in das Kartenmaterial eingelassenen Lichtleiterfasern bestehen, die eine digitale Codetransformation bewirken. Die Verwendung von Lichtleiterfasern macht die Herstellung der Karten und das Aufbringen der Information aufwendig.

Es ist weiter bekannt (US—PS 4 108 367 und F—PS 2 279 162), die informationen als Hologram auf den Datenträger aufzubringen. Gemäß der US—A—4 108 367 wird zusätzlich Information durch untershiedliche Neigungswinkel der holographischen Bilder dargestellt. Bei solchen Datenkarten ist eine hohe Fälschungssicherheit gegeben, indessen ist sowohl das Aufbringen der Information als auch das Lesen nur mit aufwendigen Mitteln erreichbar.

Weiter sind Magnetkarten bekannt geworden (US—PS 4 094 462), die vergleichsweise preiswert herstellbar sind und auf die die Information ohne grossen Aufwand aufgebracht werden kann. Es fehlt ihnen indessen für verschiedene Verwendungszwecke eine ausreichende Fälschungssicherheit. Das Magnetband kann in seinen ursprünglichen Zustand versetzt und neu magnetisiert werden. Weiter kann seine Zerstörungssicherheit nicht ausreichend sein, indem das Vorbeiführen an einem Magnet die Information verändert oder löscht.

Es ist weiter durch die europäische Patentanmeldung 32 369 bekannt geworden, die Fälschungssicherheit durch mehrere einer Informationsstelle zugeordnete lichtdurchlässige Bohrungen zur erhöhen, indem die Bohrungen so dünn sind, dass sie mit einem Photokopiergerät nicht kopierfähig sind. Die dabei geforderte Genauigkeit wird aber nur mit einem hohen Aufwand beim Aufbringen der Information erkauft.

Die vorliegende Erfindung stellt sich daher die Aufgabe, einen Datenträger der eingangs erwähnten Art derart zu verbessern, dass das Herstellen der Karte und das Aufbringen der Information — bei höher Fälschungssicherheit — mit vergleichsweise geringem Aufwand erfolgen kann.

Erfindungsgemäss wird diese Aufgabe dadurch gelöst, dass die Lichtpfade unter sich parallel angeordnet sind und zwischen der Lichteintritts- und Lichtaustrittsstelle nur zwei Reflexionsflächen aufweisen, und dass wenigstens der Teil der Datenkarte, welcher die Reflexionsflächen und den dazwischen liegenden Teil des Lichtpfades enthält, aus lichtdurchlässigem Kunststoff besteht, wobei die Information eines Informationselementes durch die Distanz der Reflexionsflächen und/oder den Neigungswinkel ($\alpha$) der der Lichtaustrittsstelle zugeordneten Reflexionsfläche gebildet ist.

Ausführungsbeispiele der Erfindung sollen nun anhand der Figuren erläutert werden. Es zeigen:

Fig. 1 ein erstes Ausführungsbeispiel einer Datenkarte in vergrösserter Darstellung sowie einzelne, vereinfacht gezeichnete Elemente einer Prüfstation der Datenkarte, und zwar

Fig. 1a in einer Aufsicht auf die Kartenebene, und

Fig. 1b in einem Querschnitt durch die Karte nach der Schnittlinie A—A,

Fig. 2a einen Ausschnitt einer Aufsicht auf die Kartenebene, ähnlich Fig. 1a, und

Fig. 2b einen Schnitt zur Schnittlinie B—B, ähnlich Fig. 1b, jedoch für eine andere Ausführungsform,

Fig. 3 zeigt eine gleiche Ausführungsform im gleichen Schnitt wie Fig. 2b, jedoch in einer anderen Phase der Kartenprüfung,

Fig. 4, 5 und 6 zeigen in einem Teilquerschnitt durch die Datenkarte drei weitere Ausführungsformen,

Fig. 7 und 8 zeigen zwei weitere Ausführungsformen.

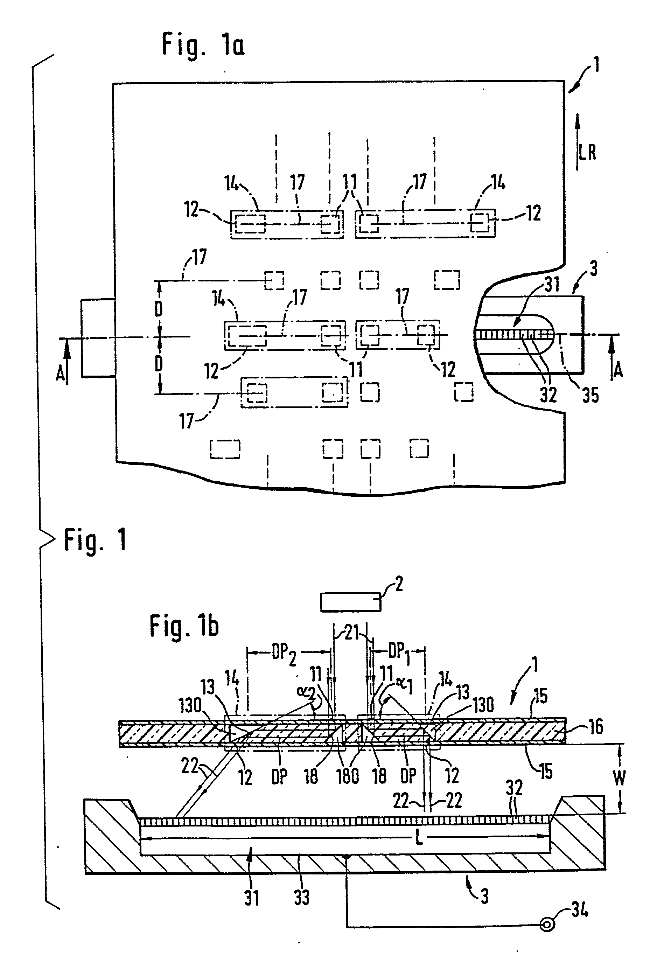

Die Datenkarte 1 besteht im wesentlichen aus Plastic-Material und kann die üblichen Dimensionen von etwa 55 mal 85 mm Kartenfläche und 0,7 mm Kartendicke aufweisen. Die Erfindung wird vorerst anhand der Fig. 1 beschreiben.

Über die Ebene der Karte sind die Informationselemente 14 verteilt, welche zusammen die in der Karte gespeicherte Karteninformation bilden.

Ein solches Informationselement 14 besteht aus einer Lichteintrittsstelle 11, bei der Licht in die Karte eintreten kann, einer Kartenstrecke DP, in welcher das bei der Lichteintrittsstelle in die Karte eingetretene Licht parallel zur Kartenebene verläuft und einer Lichtaustrittsstelle 12, bei der das Licht die Karte wieder verlässt.

Bei diesem Ausführungsbeispiel besteht die Datenkarte aus einer mittleren Schicht 16, welche den grössten Teil der Kartendicke beansprucht, und den beiden Deckschichten 15.

Die drei Schichten können miteinander verschweisst sein und die Schicht 16 muss zumindest von Lichteintrittsstelle bis Lichtaustrittsstelle für das verwendete Licht transparent sein.

Wie aus Fig. 1b ersichtlich ist, sind bei dieser Ausführungsform zwei nebeneinanderliegende Informationselemente 14 vorhanden. Eine in der Prüfstation vorhandene Lichtquelle sendet parallel gerichtetes Licht 21 senkrecht auf die Kartenebene. Dieses dringt über die beiden Lichteintrittsstellen 11 in die Karte ein. In der Kartenschicht 16 sind die Hohlräume 180 mit den um 45° gegen die Kartenebene geneigten Reflexionsflächen 18 vorhanden, an welchen das eingetretene Licht in Richtung der Kartenebene total reflektiert wird. Nach Durchlauf der Kartenstrecke DP, deren Länge in Fig. 1b mit $DP_1$ und $DP_2$ bezeichnet ist, trifft das Licht auf die durch die Hohlräume 130 gebildeten Reflexionsflächen 13, wo wiederum Totalreflexion stattfindet und so das Licht über die Lichtaustrittsstellen 12 aus der Karte austritt. Dieses austretende Licht 22 wird von einem photoelektrischen Sensor 3 detektiert. Die Position des Auftreffens des aus aus der Karte austretenden Lichtes 22 auf den Photosensor ist abhängig einerseits von der geometrischen Lage der Lichtaustrittsstellen (12) bzw. der Lichtaustritts-Reflexionsflächen 13, d.h. z.B. von den Strecken $DP_1$ und $DP_2$, und andererseits vom Neigungswinkel $\alpha$ dieser Reflexionsflächen gegen die Kartenebene, welche beiden Parameter die Karteninformation eines Informationselementes 14 beinhalten.

Vorzugsweise bestehen die photoelektrischen Sensoren in der Prüfstation aus einem einzigen linearen Photodioden-Array 31, bei dem längs einer Photodiodenachse 35 (Fig. 1a) eine Anzahl von z.B. 64 bis 1024 einzelnen Photodioden 32 mit gegenseitigem Abstand von z.B. 0,015 bis 0,025 mm angeordnet sind. Die vom auf die einzelnen Photodioden fallenden Licht 22 erzeugten Photoströme werden von einem in der elektrischen Schaltung 33 enthaltenen Schieberegister sequentiell, d.h. Photodiode um Photodiode auf den elektrischen Ausgang 34 als elektrische Impulsesequenz transferiert, in welcher die Karteninformation in elektrischer Form vorliegt, welche in der Prüfstation als Identitätsprüfung auf Richtigkeit überprüft wird.

Die Verbindungslinien 17 zwischen den Lichtaustrittsstellen 12 und den zugeordneten Lichteintrittsstellen 11 der Informationselemente 14 liegen parallel zu der Photodiodenachse 35 und beide stehen senkrecht zur Kartenlaufrichtung LR in der Prüfstation. Dadurch läuft während der Kartenprüfung ein Informationselement nach dem andern am Photodioden-Array vorbei und wird von diesem detektiert.

Natürlich muss der maximale Abstand von zwei auf einer Verbindungslinie 17 liegenden Lichtaustrittsstellen 12 kleiner als die Länge L des Photodioden-arrays 3 sein.

Die Strecken $DP_1$ bzw. $DP_2$ gemäss Fig. 1b stellen zusammen mit dem Winkel $\alpha$ die Karteninformation eines Informationselementes 14 dar.

Die Strecke $DP_1$ kann z.B. diskrete Längen aufweisen, mit Abstufungen von 0,3 mm zwischen den Positionen, wodurch z.B. die minimale Strecke $DP_{1\,min} = 1$ mm und die maximale Strecke $DP_{1\,max} = 5,5$ mm wird. In diesem Bereich von 4,5 m liegen bei 0,025 mm Photodioden-Distanz 180 Photodioden, welche natürlich bei weitem genügend Auflösung haben, um die 16 um je 0,3 mm verschiedenen Distanzen DP zu detektieren.

Mit einem Informationselement 14 kann somit eine 4 bit-Information, und mit zwei nebeneinanderliegenden Informationselementen eine 8 bit-Information gespeichert werden. Der Abstand W des Photodioden-Arrays von der Karte in der Prüfstation soll gerade so gross sein, dass die Genauigkeitsanforderungen speziell bezüglich der Reflexionsflächen für eine industrielle Kartenfertigung nicht zu gross werden.

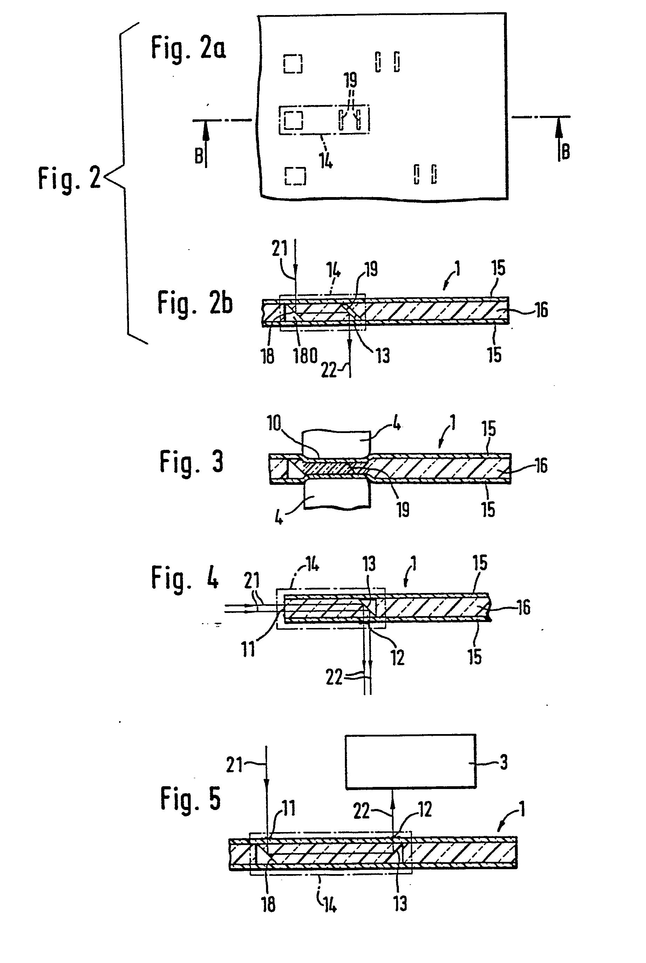

In der Ausführungsform von Fig. 2 ist der Hohlraum 130 ersetzt durch einen dünnen Spalt 19, was für die Anwendung der Datenkarte als Geldersatzkarte vorteilhaft sein kann. Bei dieser Verwendungsart kann jedes einzelne Informationselement 14 einen gewissen Entwertungs-Geldbetrag, z.B. Fr. 1.-, darstellen. Die Entwertung, d.h. die Verminderung des Kartenwertes um diesen Geldbetrag, kann durch Zerstörung bzw. Löschung der in einem Informationselement enthaltenen Karteninformation geschehen.

Gemäss dem Beispiel der Fig. 2 und 3 geschieht dies dadurch, dass in der Prüfstation mittels der geheizten Presskörper 4 die Karte im Bereich eines Informationselementes 14 thermisch aufgeheizt und komprimiert wird, wodurch der Spalt 19 geschlossen und die Reflexionsfläche 13 zerstört und damit das Informationselement gelöscht wird.

Für den Kartenbenützer ist es wünschenswert, dass jede entwertete Stelle, d.h. jedes zerstörte Informationselement, visuell erkennbar ist. Dies kann dadurch geschehen, dass durch die thermische Einwirkung der Kunststoff der Schicht 16 und/oder 15 verfärbt wird. Diese Verfärbung ist in Fig. 3 durch die verstärkte Schraffur markiert.

Die Verfärbung der zu entwertenden Stelle könnte auch durch chemische Einwirkung oder Farbauftrag geschehen.

Ferner könnte sowohl die Zerstörung der Information eines Informationselementes zur Entwertung als auch die Anzeige dieser Entwertung dadurch geschehen, das mittels einer Stanz-Einrichtung in der Prüfstation jeweils ein ganzer Bereich eines Informationselementes ausgestanzt wird.

Die Einrichtung hat den Vorteil, das ausser der Lichtquelle und dem Photodioden-Array praktisch keine optischen Mittel erforderlich sind.

Bei der Ausführungsform von Fig. 4 befindet sich die Lichteintrittsstelle 11 an einer Kartenkante, und bei der Ausführungsform von Fig. 5 befinden sich Lichteintrittsstelle 11 und Lichtaustrittsstelle 12 auf der gleichen Kartenseite.

Die Reflexionsflächen 13 und 18 könnten im Prinzip auch metallisiert sein.

Anstatt sichtbares Licht könnte auch Infrarotlicht zur Anwendung gelangen.

Zur Erschwerung von Fälschungen sind die Abstände D er einzelnen Informationselemente 14 in Laufrichtung LR (Fig. 1a) recht klein, z.B. 0,7 mm. Eine Anfertigung der Hohlräume 130 bzw. des Spaltes 19 durch Fräsen ist recht schwierig. Ausserdem müssten die Reflexionsflächen sehr genau gefertigt werden.

Die Kartenfertigung kann nur mit den eigens dafür gebauten Herstellungsmaschinen rationell und wirtschaftlich durchgeführt werden.

Fälschungsmethoden mit zweidimensionalen Kopiermethoden, z.B. Photokopien, sind nicht möglich.

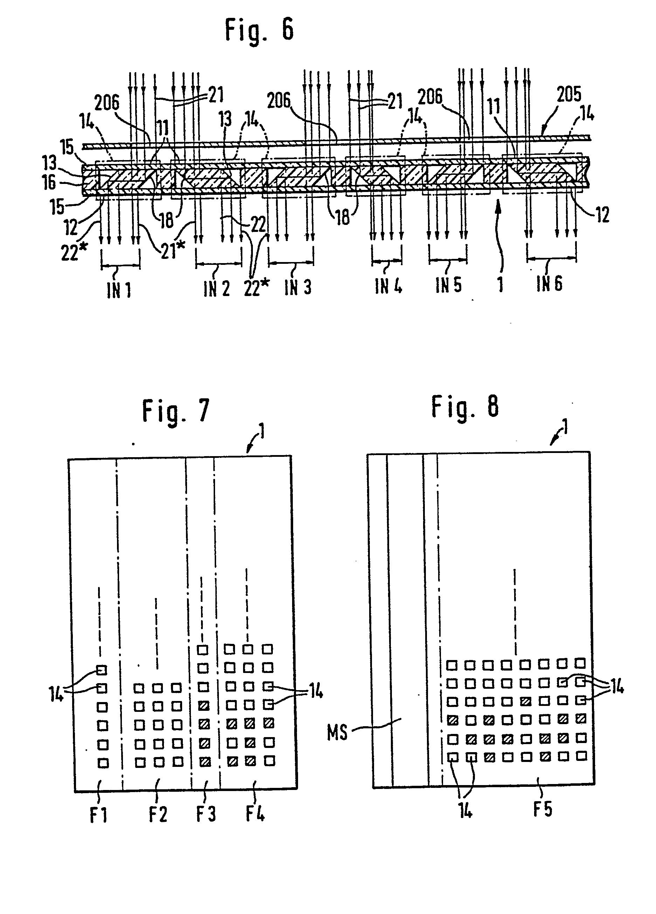

In Fig. 6 ist ein Kartenquerschnitt einer Ausführungsform mit einer Anzahl von in der Verbindungslinie 17 (Fig. 1) nebeneinanderliegenden Lichteintrittsstellen 11 und Lichtaustrittsstellen 12 aufgezeichnet. In der Prüfstation ist eine Lichtmaske 205 mit den Oeffnungen 206 vorhanden, welche die einfallenden Lichtstrahlen nur in der Gegend der Lichteintrittsstellen durchlassen. Die Lichtmaskenöffnungen 206 sind so gelegt, dass ein kleiner Teil des einfallenden Lichtes 21 ohne abgelenkt zu werden auf der andern Seite der Karte 1 austritt. Dieses austretende Licht ist beim Grenzstrahl 21* durch die Reflexionsfläche 18 der Karte begrenzt, während das bei der Lichtaustrittsstelle 12 austretende Licht 22 beim Grenzstrahl 22* durch die Reflexionsfläche 13 der Karte begrenzt ist.

Die Distanzen IN 1, IN 2, IN 3, IN 4 oder IN 5 zwischen den Grenzstrahlen 21* und 22* entsphrechen den Karteninformationen jeweils eines Informationselementes 14 und sind natürlich abhängig von Lage und Winkelrichtung der Reflexionsflächen 13 der Lichtaustrittsstellen 12.

Die Distanzen IN 1, IN 2 ... sind nur von der Relativlage von zwei benachbarten Reflexionsflächen 13 und 18 der Karte abhängig und nicht von deren absoluter Lage in der Karte, und da diese Distanzen recht klein sind, z.B. 1 bis 2 mm, sind sie auch für eine Kunststoffkarte recht genau und von Klimaschwankungen wenig abhängig. Mit Photodiodenarray von 0,025 mm Photodiodenabstand können Stufen von 0,1 mm der Distanzen IN 1, IN 2 noch leicht voneinander unterschieden werden. Dabei können für IN = 1 mm bis IN = 2 mm zehn Stufen von je 0,1 mm gebildet werden, welche z.B. den zehn Dezimalziffern 0 bis 9 zugeordnet werden können. Ein Informationselement 14 kann so die Information einer Dezimalziffer in codierter Form enthalten. Für die Abtastung mittels eines Photodiodenarrays mit ca. 1000 Photodioden mit Breite von L = 25 mm können auf einer Verbindungslinie 17 etwa 8 Informationselemente liegen, und bei einer Distanz von D = 1,5 mm der Verbindungslinien haben total 400 Informationselemente auf der Karte Platz. Es können also z.B. 400 Dezimalziffern gespeichert werden. Von diesen aus 400 Dezimalziffern bestehenden, grossen Karteninformationen kann jede einzelne Dezimalziffer selektiv gelöscht bzw. zerstört werden.

Eine unbefugte Kartenherstellung ohne die richtige Herstellungseinrichtung dieser dreidimensionalen Karten mit den hohen Genauigkeitsanforderungen bezüglich Lage und Winkelstellung der Reflexionsflächen wäre recht schwierig, und die Karte ist deshalb sehr fälschungssicher.

Es sind die folgenden drei Eigenschaften, welche die Karte für die unten beschriebenen Anwendungen geeignet machen, nämlich erstens die grosse Fälschungssicherheit, d.h. die schwierige unbefugte Reproduzierbarkeit zufolge der dreidimensionalen Informationsspeicherung und deren grosse Genauigkeitsanforderung, zweitens die leichte und irreversible Löschbarkeit bzw. Zerstörbarkeit der einzelnen Informationselemente, und drittens die grosse Karteninformation. Damit wird die Karte u.a. für folgende Anwendungen geeignet:

a) Als reine Geldersatzkarte, bei der jedes Informationselement einem bestimmten Geldwert entspricht, und die Karte durch Löschung bzw. Zerstörung dieser Informationselemente in Entwertungsstationen entwertbar ist.

b) Als reine Identitätskarte, bei der eine erste Gruppe von Informationselementen die Information einer individuellen, von Karte zu Karte verschiedenen Kartenummer entspricht, und eine zweite Gruppe von Informationselementen eine ebenfalls von Karte zu Karte verschiedene Identitäts-Information enthält, welche bei der Kartenherstellung in einem Chiffrierrechner aus Kartennummer und einem Geheimschlüssel errechnet wurde, und wobei bei der Identitätsprüfung in einer Prüfstation, welche ebenfalls den Chiffreierrechner und den Geheimschlüssel enthält, die Ueberprüfung der Korrespondenz zwischen Kartennummer und Identitätsinformation stattfindet.

c) Als Kombination von Geldersatzkarte und Identitätskarte, bei welcher die Karte für verschiedene Organisationen als Zahlungsmittel mit individueller Konto-Belastung verwendbar ist.

d) Als Zeiterfassungskarte, bei welcher die Zeit und/oder das Datum in einer Zeiterfassungsstation durch Löschung bzw. Zerstörung einer die Zeit darstellenden Auswahl von Informationselementen nicht fälschbar markiert wird.

e) Beliebige Kombinationen von Geldersatzkarte, Identitätskarte, Zeiterfassungskarte, bei welchen jeweils auf einer einzigen Karte separate Felder von Informationselementen vorhanden sind, und in einem separaten Nummernfeld (F 1) die Kartennummer, in einem weiteren separaten Identifikationsfeld (F 2) die Identitätsinformation, und in einem separaten Geldentwertungsfeld (F 3) die Geldwertinformation, und in einem separaten Zeiterfassungsfeld (F 4) die Zeitinformation enthält.

In Fig. 7 ist eine solche Karte eingezeichnet, wobei jeweils die gelöschten Informationselemente 14 schraffiert gezeichnet sind. Die nicht schraffiert gezeichneten, nicht gelöschten Informationselemente enthalten z.B. je eine Dezimalziffer als Karteninformation.

Die drei oben erwähnten Eigenschaften der Karte, nämlich hohe Fälschungssicherheit, leichte Löschbarkeit der Informationselemente sowie grosse Karteninformation, erlauben eine Ausführungsform der Karte, bei welcher ein Teil der Karteninformation in den Informationselementen 14 und ein weiterer Teil in magnetischer, leicht veränderbarer Form in einem auf die Karte aufgebrachten Magnetstreifen (MS) enthalten ist.

Die magnetisch aufgezeichnete Information ist sehr geeignet für die Speicherung variabler Information, wie Geldwerte bei Verwendung als Geldersatzkarte oder Datum oder Zeitinformation, bei Verwendung als Zeiterfassungskarte. In beiden Fällen besteht der Wunsch, dass die gespeicherte Information fälschungssicher ist, was bei magnetischer Aufzeichnung ohne besondere Massnahmen nicht der Fall ist.

Mit Hilfe der auf der gleichen Karte aufgebrachten Informationselemente lässt sich die Fälschungssicherheit der magnetisch aufgezeichneten, variablen Information ganz wesentlich erhöhen, was am Beispiel einer Geldersatzkarte, z.B. gemäss Fig. 8, kurz beschrieben wird:

—Die Echtheitsprüfung und allfällige Identitätsprüfung geschieht durch Prüfung der in den Informationselementen 14 enthaltenen Information.

—Der Geldbetrag wird in einer Entwertungsstation in chiffrierter Form magnetisch aufgezeichnet unter Verwendung eines Chiffrierrechners und einer Chiffrier- und Dechiffriereinrichtung bekannter Art. Zur Chiffrierung des Geldbetrages wird die Information eines Geheimschlüssels sowie die momentane Informationselement-Information des Feldes F 5 von Fig. 12 in den Chiffrierrechner eingegeben. Bei jedem Entwertungsvorgang wird durch irreversibles Löschen einer oder mehrerer Informationselemente 14 die Information des Feldes F 5 und damit auch die Art der Chiffrierung irreversibel geändert.

Ohne diese Veränderung wäre es möglich, die magnetische Geldwertaufzeichnung vor der Entwertung von der Karte auf ein Tonband zu übertragen, und nach der Entwertung wieder auf die Karte rückzuübertragen, wobei die Unkenntnis des Geheimschlüssels keine Rolle spielt. Man könte also die Karte immer auf den gleichen Geldwert rückstellen. Verwendet man jedoch die Informationselement-Information des Feldes F 5 zur Eingabe in den Chiffrierrechner und dechiffriert den magnetisch aufgezeichneten Geldbetrag mit der vorerst unveränderten Informationselement-Information und verändert vor dem Chiffrieren und Neu-Aufzeichnen des entwerteten Geldbetrages die Informationselement-Information des Feldes F 5 durch Lösung von einer oder mehrerer Informationselemente, dann ist die oben beschriebene Kopiermethode unmöglich, da der Geldwert vor der Entwertung in einer anderen Art chiffriert wurde.

Mit diesen Methoden wird die magnetische Geldwertspeicherung ebenso fälschungssicher gemacht wie die Informationselemente selbst.

In Fig. 7 ist eine solche Karte mit Magnetstreifen MS eingezeichnet, wobei die gelöschten Informationselemente 14 schraffiert gezeichnet sind. Die nicht schraffierten, nicht gelöschten Informationselemente enthalten je eine Dezimalziffer als Karteninformation.

**Patentansprüche**

1. Datenkarte, welche maschinell lesbare Karteninformation in kodierter Form enthält, wobei jedes Informationselement einen Lichtpfad mit einer Lichteintrittsstelle (11) und einer gegenüber dieser in der Kartenebene versetzten Lichtaustrittsstelle (12) aufweist, die in einer der beiden zur Kartenebene parallelen Kartenflächen angeordnet sind, dadurch gekennzeichnet, dass die Lichtpfade unter sich parallel angeordnet sind und zwischen der Lichteintritts- und der Lichtaustrittsstelle (11, 12) nur zwei Reflexionsflächen (13, 18) aufweisen und dass wenigstens der Teil der Datenkarte, welcher die Reflexionsflächen (13, 18) und den dazwischen liegenden Teil des Lichtpfades enthält, aus lichtdurchlässigem Kunststoff besteht, wobei die Information eines Informationselementes durch die Distanz der Reflexionsflächen und/oder den Neigungswinkel ($\alpha$) der der Lichtaustrittsstelle zugeordneten Reflexionsfläche gebildet ist.

2. Datenkarte nach Anspruch 1, dadurch gekennzeichnet, dass die Reflexionsflächen (13, 18) die gleiche Neigung zur Kartenebene aufweisen.

**Revendications**

1. Carte de données qui contient une information de carte sous forme codée, lisible par une machine, chaque élément d'information présentant un chemin lumineux avec un point d'entrée de lumière (11) et un point de sortie de lumière (12) décalé par rapport au précédent dans le plan de la carte, et qui sont prévus dans l'une des deux surfaces de carte parallèles au plan de la carte, caractérisée en ce que les chemins lumineux sont parallèles entre eux et présentent uniquement deux surfaces de réflexion (13, 18) entre le point d'entrée de la lumière et le point de sortie de la lumière (11, 12) et en ce qu'au moins la partie de la carte de données qui comporte les surfaces de réflexion (13, 18) et la partie intermédiaire du chemin lumineux est en matière synthétique transparente, l'information d'un élément d'information étant représentée par la distance des surfaces de réflexion et/ou de l'angle d'inclinaison ($\alpha$) de la surface de réflexion (13) associée au point d'entrée de la lumière.

2. Carte de données selon la revendication 1, caractérisée en ce que les surfaces de réflexion (13, 18) ont la même inclinaison par rapport au plan de la carte.

**Claims**

1. Data storage card which contains machine-readable information in encoded form and wherein each item of information comprises a light path with a light-admitting location (11) and a light-discharging location (12) offset with reference to the light-admitting location in the plane of the card, each of the light-admitting and light-discharging locations being disposed in one of the card surfaces which are parallel to the plane of the card, characterised in that the light paths are parallel to one another and each thereof comprises only two reflecting surfaces (13, 18) between the respective light-admitting and light-discharging locations (11, 12), and in that at least that portion of the data storage card which contains the reflecting surfaces and the portion of the light path therebetween consists of light-transmitting synthetic plastic material, the information of each item of information being constituted by the distance between the respective reflecting surfaces and/or the angle $(\alpha)$ of inclination of the reflecting surface (13) which is adjacent to the corresponding light-discharging location.

2. Data storage card according to Claim 1, characterised in that the inclination of the reflecting surfaces (13, 18) with reference to the plane of the card is the same.

Fig. 1a

Fig. 1

Fig. 1b

Fig. 2 {
Fig. 2a

Fig. 2b

Fig. 3

Fig. 4

Fig. 5

# Fig. 6

# Fig. 7

# Fig. 8